# EUROPEAN PATENT SPECIFICATION

(11) **EP 3 164 932 B1**
(45) Date of publication and mention of the grant of the patent: **27.04.2022**
(21) Application number: 15738232.6
(22) Date of filing: 02.07.2015
(51) Int. Cl.: H02K 11/00, B66B 11/04, H02K 1/27, H02K 5/173

(54) **ROTARY MACHINE WITH ENCODER DIRECTLY CONNECTED TO ROTOR**
DREHENDE ELEKTRISCHE MASCHINE MIT GEBER DER DIREKT AM LÄUFER BEFESTIGT IST
MACHINE ROTATIVE À CODEUR DIRECTEMENT RELIÉ À UN ROTOR

(30) Priority: 04.07.2014 CN 201410315937
(43) Date of publication of application: 10.05.2017
(73) Proprietor: Otis Elevator Company, Farmington CT 06032 (US)
(72) Inventor: LIN, Le, Tianjin 300457 (CN)
(74) Representative: Dehns
(86) International application number: PCT/US2015/039102
(87) International publication number: WO 2016/004382

(56) References cited:
- EP-A2- 1 868 282
- WO-A1-2011/005264
- DE-A1- 19 807 738

## Description

### BACKGROUND

### 1. Technical Field.

Aspects of the present invention relate to a rotary machine, and more particularly relate to a rotary machine having a rotor and an encoder directly connected to the rotor.

### 2. Background Information.

It is known to provide a rotary machine having a rotor and an encoder that is operable to determine a rotation characteristic (e.g., rotation speed, rotation direction) of the rotor. DE 19807738A1 discloses a rotary machine according to the preamble of claim 1. In such instances, the indirect connection between the encoder shaft and the rotor can be susceptible to misalignment and/or mechanical failure, which can cause the encoder to malfunction. Aspects of the present invention are directed to these and other problems.

### SUMMARY OF ASPECTS OF THE INVENTION

According to an aspect of the present invention, a rotary machine is provided as claimed in claim 1.

Additionally, the present invention may include one or more of the following features individually or in combination:
- the housing shaft extends in the axial direction between a first housing shaft end and a second housing shaft end, the first housing shaft end is disposed proximate the housing wall, the second housing shaft end is disposed proximate the connection plate, and the housing shaft forms a housing shaft cavity extending between the first housing shaft end and the second housing shaft end; and
   the encoder further includes an encoder body, the encoder body is positionally fixed relative to the housing shaft, the encoder body is disposed at least partially within the housing shaft cavity proximate the second housing shaft end, the encoder shaft extends from the encoder body, and the encoder shaft is rotatable relative to the encoder body;
- the encoder is operable to generate a signal indicative of the rotation characteristic of the rotor;
- the rotary machine further comprises a control unit, the control unit is operable to receive the signal from the encoder, and the control unit is operable to control a component of the rotary machine in response to the signal;
- the web portion of the connection plate is connected to an end surface of the rotor;
- the rotor includes an annular rotor sheave having an annularly-extending sheave groove configured to contact a tension member;
- the rotor includes an annular rotor pulley having a first annular portion, a second annular portion, and a web portion, wherein the first annular portion and the second annular portion are separated from one another by a distance that extends in the axial direction, and the web portion extends between the first annular portion and the second annular portion in a radial direction that is at least substantially perpendicular to the axial direction;
- a stator disposed relative to the housing and the rotor, wherein the stator includes a stator annulus that extends concentrically about the shaft centerline; and
   the first annular portion of the rotor pulley is aligned with the stator in the axial direction;
- the bearing supports the first annular portion of the rotor pulley on the housing shaft;
- a stator disposed relative to the housing and the rotor, wherein the stator includes a stator annulus that extends concentrically about the shaft centerline, the stator annulus defines a plurality of radially extending stator teeth, and the stator includes a plurality of stator coils wrapped around the plurality of stator teeth; and
   the rotor includes a plurality of permanent magnets extending circumferentially about the housing shaft centerline, and the plurality of permanent magnets generate a rotor magnetic field operable to interact with the plurality of stator coils;
- the rotary machine is configured for use as an electric generator, the rotor magnetic field is operable to cause electric current to flow through the plurality of stator coils when the rotor rotates relative to the housing shaft, and the plurality of stator coils is connected to a power storage device operable to receive and store power generated by electric current flowing through the stator coils;
- the rotary machine is configured for use as an electric motor, and the plurality of stator coils are operable to generate a stator magnetic field operable to interact with the rotor magnetic field to cause the rotor to rotate relative to the housing shaft;
- the rotary machine is operable to move a tension member in contact with the rotor; and
- the tension member is an elevator rope extending between an elevator car and a counterweight, and movement of the tension member by the rotary machine is operable to cause movement of the elevator car and the counterweight.

These and other aspects of the present invention will become apparent in light of the drawings and detailed description provided below.

### BRIEF DESCRIPTION OF THE DRAWINGS

FIG. 1 illustrates a perspective exploded view of a rotary machine.
FIG. 2 illustrates a sectional elevation view of the rotary machine of FIG. 1.
FIG. 3 illustrates a partial sectional perspective view of the encoder and its positioning within the rotary machine of FIG. 1.
FIG. 4 illustrates a partial sectional perspective view of another rotary machine.
FIG. 5 illustrates a partial sectional perspective view of another rotary machine.
FIG. 6 illustrates a partial sectional perspective view of another rotary machine.

### DETAILED DESCRIPTION OF ASPECTS OF THE INVENTION

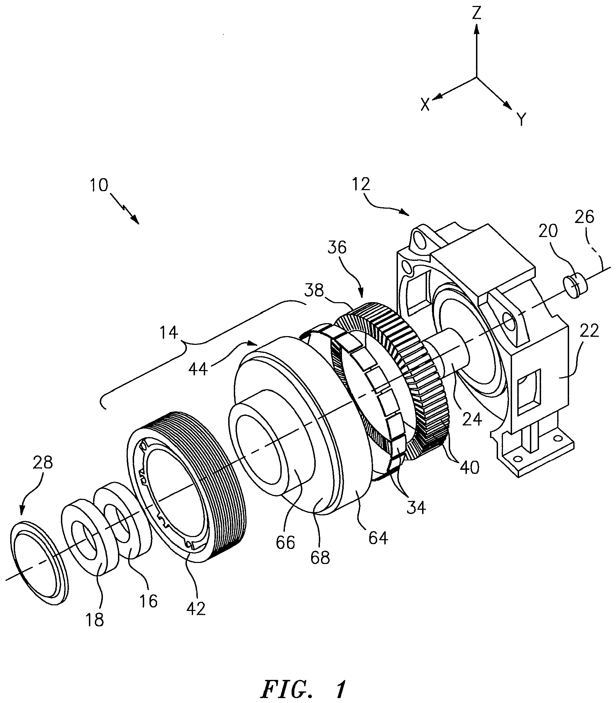

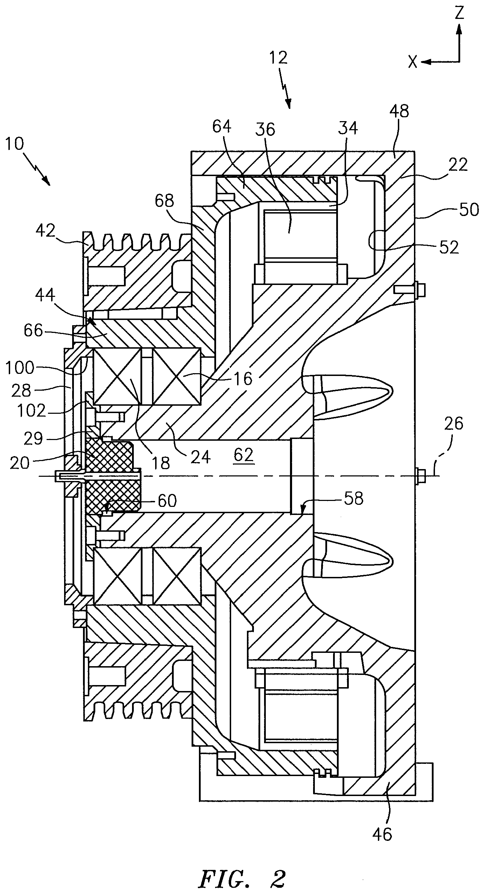

Referring to FIGS. 1 and 2, the present disclosure describes embodiments of a rotary machine 10 in which an encoder 20 is directly connected to a rotor 14 via connection plate 28.

The present disclosure describes aspects of the present invention with reference to the embodiment illustrated in the drawings; however, aspects of the present invention are not limited to the embodiment illustrated in the drawings. The present disclosure may describe one or more features as having a length extending along a x-axis, a width extending along a y-axis, and/or a height extending along a z-axis. The drawings illustrate the respective axes.

The present disclosure uses the terms "circumferential", "annular", and variations thereof, to describe one or more features. The term "circumferential", and variations thereof, are used herein to indicate that a feature extends along a curve that is centered about an axis. The term "annular", is used herein to indicate that a feature is at least partially in the form of a ring.

Referring to FIGS. 1 and 2, the rotary machine 10 includes a housing 12, a rotor 14, two bearings 16, 18, a connection plate 28, and an encoder 20. In the illustrated embodiments, the rotary machine 10 additionally includes a connection ring 29.

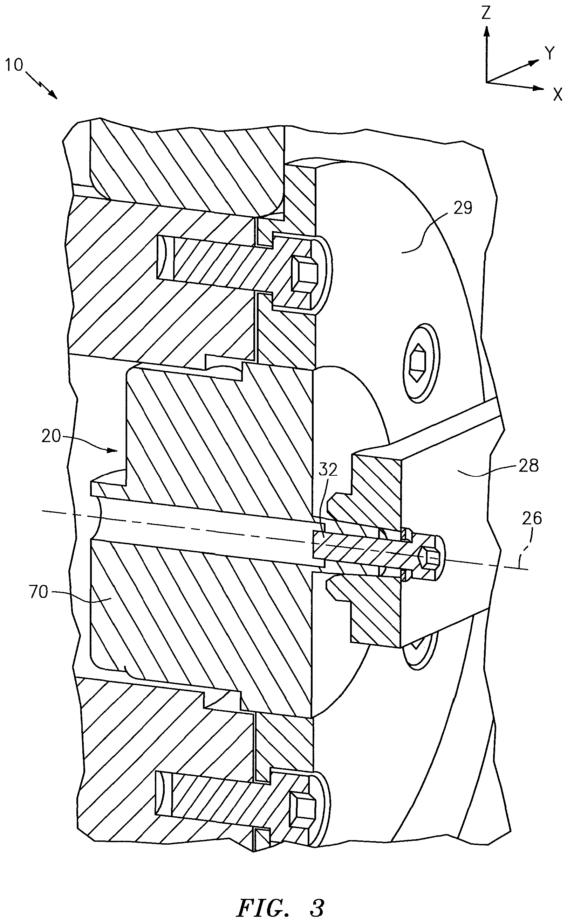

The housing 12 includes a housing wall 22 and a housing shaft 24. The housing shaft 24 extends from the housing wall 22 in an axial direction along a housing shaft centerline 26. The rotor 14 extends from the connection plate 28 in the axial direction, and extends concentrically about the housing shaft centerline 26. The bearings 16, 18 support the rotor 14 on the housing shaft 24, and thereby enable rotation of the rotor 14 relative to the housing shaft 24 about the housing shaft centerline 26. The encoder 20 is positionally fixed relative to the housing shaft 24. The encoder 20 has a rotatable encoder shaft 32 (see FIG. 3). The encoder shaft 32 extends in the axial direction, and extends (e.g., concentrically) about the housing shaft centerline 26. The encoder shaft 32 is directly connected to the connection plate 28. The encoder 20 is operable to sense a rotation characteristic (e.g., rotation speed, rotation direction) of the encoder shaft 32.

The rotary machine 10 can be configured for various different uses. In some embodiments, the rotary machine 10 is configured for use as an electric machine (e.g., an electric generator, an electric motor). Referring to FIGS. 1 and 2, in the illustrated embodiments the rotary machine 10 is configured for use as an elevator system electric motor. As such, the rotary machine 10 additionally includes a stator 36 disposed relative to the housing 12 and the rotor 14. The stator 36 includes a stator annulus 38 that extends concentrically about the housing shaft centerline 26. The stator annulus 38 defines a plurality of radially-extending stator teeth 40. Each of the stator teeth 40 includes a stator coil (not shown) wrapped around it in a known manner. The operation of the rotary machine 10 will be described in more detail below.

Referring to FIG. 2, in the illustrated embodiments the housing wall 22 extends in a heightwise direction between a housing base 46 and a housing top 48. The housing wall 22 extends in a lengthwise direction between a first housing wall surface 50 and a second housing wall surface 52. The housing shaft 24 extends from the second housing wall surface 52. The housing shaft 24 extends in a lengthwise direction between a first housing shaft end 58 and a second housing shaft end 60. The first housing shaft end 58 is disposed proximate the second housing wall surface 52. The second housing shaft end 60 is disposed proximate the connection plate 28. The housing shaft 24 defines a housing shaft cavity 62 that extends in a lengthwise direction between the first and second housing shaft ends 58, 60. The housing shaft cavity 62 is aligned with the housing wall aperture 56.

Referring to FIGS. 1 and 2, in the illustrated embodiments the rotor 14 is segmented into a rotor sheave 42, a rotor pulley 44, and a plurality of permanent magnets 34.

The rotor sheave 42 is an annular structure, and the radially outer surface of the rotor sheave 42 defines a plurality of an annularly-extending sheave grooves, each of which are configured to contact a tension member (e.g., an elevator rope).

The rotor pulley 44 includes a first annular portion 64, a second annular portion 66, and a web portion 68. The first and second annular portions 64, 66 are separated from one another by a lengthwise-extending distance. The web portion 68 extends radially between the first and second annular portions 64, 66. The first annular portion 64 defines a radially inner surface that is configured such that the radially inner surface is separated from the stator 36 by a radially-extending distance. The second annular portion 66 of the rotor pulley 44 defines a radially inner surface that is configured such that the second annular portion 66 can be supported on the housing shaft 24 by the first and second bearings 16, 18.

The permanent magnets 34 extend circumferentially about the housing shaft centerline 26. The permanent magnets 34 are disposed relative to the radially inner surface of the first annular portion 64 of the rotor pulley 44, and thus are axially aligned with the stator 36. The permanent magnets 34 generate a rotor magnetic field, as will be described in more detail below.

Referring to FIGS. 1 and 2, in the illustrated embodiments the rotary machine 10 includes first and second bearings 16, 18 that are separated from one another by a relatively small lengthwise-extending distance. In other embodiments not shown in the drawings, the rotary machine 10 can include only one (1) bearing, or the rotary machine 10 can include more than two (2) bearings. In the illustrated embodiments, the first and second bearings 16, 18 are positioned within a cavity defined by the second annular portion 66 of the rotor pulley 44.

Referring to FIG. 2, according to the invention, connection plate 28 is a disc-shaped unitary structure. The connection plate 28 includes a base portion and a web portion that extends radially outward from the base portion. The connection plate 28 is connected to the rotor 12 at a position that is radially outward of the first and second bearings 16, 18. In particular, the web portion of the connection plate 28 is connected to an end surface of the second annular portion 66 of the rotor pulley 44. The web portion of the connection plate 28 includes, according to the invention, a flange 100 that engages a radially outer portion of the second bearing 18 to aid in maintaining an axial alignment of the first and second bearings 16, 18.

Referring to FIG. 2, according to the invention, the connection ring 29 is an annular structure that is positioned axially between the connection plate 28 and the housing shaft 24. The connection ring 29 includes an annular base portion and an annular web portion that extends radially outward from the base portion. The base portion of the connection ring 29 includes an aperture through which one or more portions of the encoder 20 extend, as will be described below. The connection ring 29 is connected to the housing 12 at a position that is radially inward of the first and second bearings 16, 18. In particular, the web portion of the connection ring 29 is connected to an end surface of the housing shaft 24. The web portion of the connection ring 29 includes, according to the invention, a flange 102 that engages a radially inner portion of the second bearing 18 to aid in maintaining an axial alignment of the first and second bearings 16, 18.

Referring to FIGS. 3-6, in the illustrated embodiments the encoder 20 includes an encoder body 70 and an encoder shaft 32. The encoder shaft 32 extends from the encoder body 70 in a lengthwise direction along the housing shaft centerline 26. The encoder shaft 32 is directly connected to the base portion of the connection plate 28. In some embodiments not shown in the drawings, the encoder shaft 32 is integrally connected to the base portion of the connection plate 28 (i.e., the encoder shaft 32 and the connection plate 28 are a unitary structure).

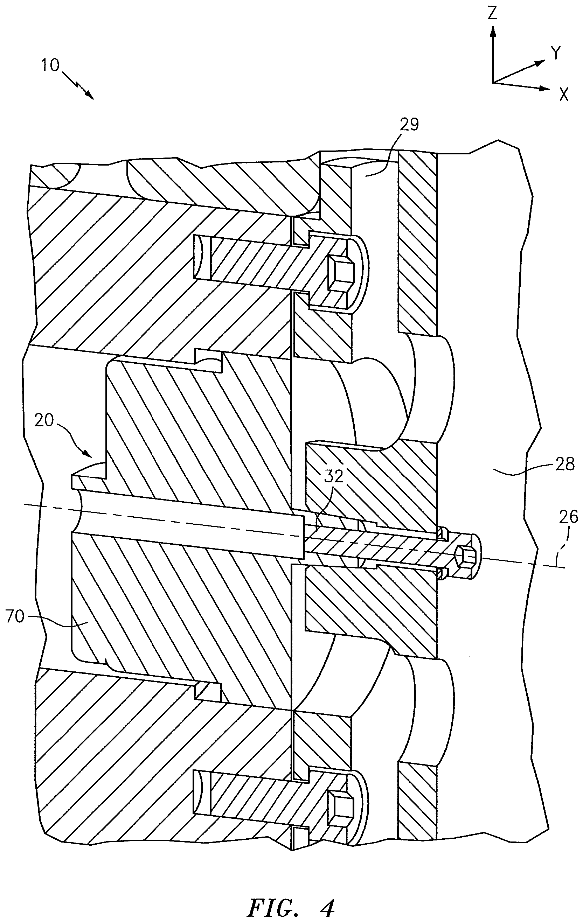

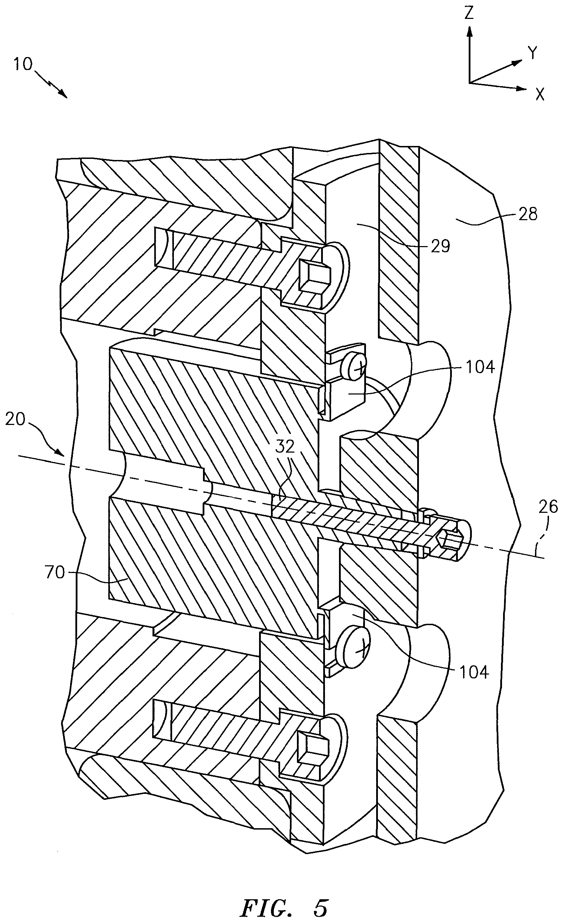

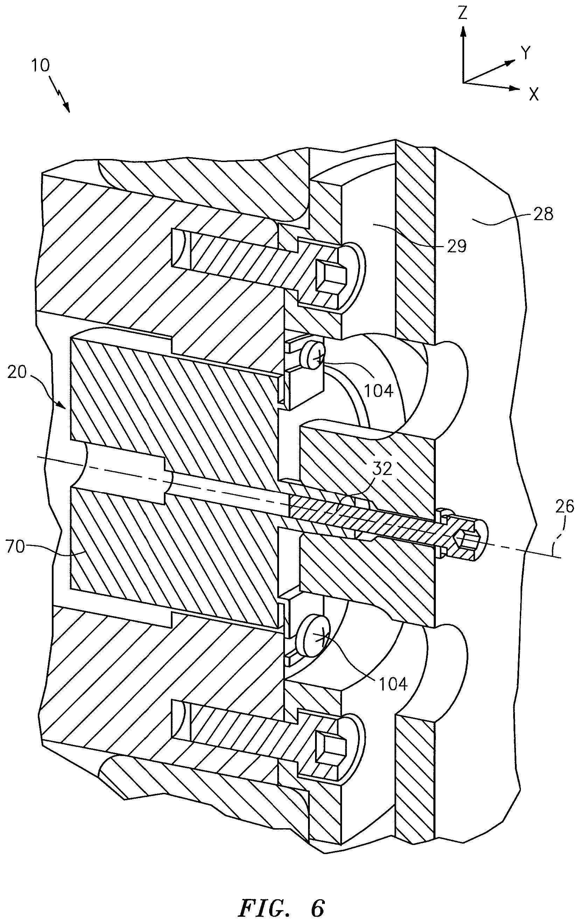

Referring to FIGS. 3-6, in the illustrated embodiments the encoder 20 is positioned relative to the housing 12 such that the encoder shaft 32 extends about the housing shaft centerline 26. The encoder body 70 is disposed at least partially within the housing shaft cavity 62 proximate the second housing shaft end 60. In some embodiments (see FIGS. 3 and 5), a portion of the encoder body 70 extends through the aperture in the base portion of the connection ring 29. In other embodiments (see FIGS. 4 and 6), the encoder body 70 is disposed entirely within the housing shaft cavity 62. In some embodiments (see FIG. 5), the encoder body 70 includes one or more radially-extending flanges 104 that permit connection of the encoder body 70 with the base portion of the connection ring 29. In some embodiments (see FIG. 6), the encoder body 70 includes one or more radially-extending flanges 104 that permit connection of the encoder body 70 with an end surface of the housing shaft 24.

The encoder 20 is operable to sense a rotation characteristic (e.g., rotation speed, rotation direction) of the encoder shaft 32 in a known manner. The encoder 20 is operable to determine a rotation characteristic (e.g., rotation speed, rotation direction) of the rotor 14 based on the rotation characteristic of the encoder shaft 32 in a known manner; and the encoder 20 is operable to generate (e.g., continuously generate, periodically generate) a signal indicative of the rotation characteristic of the rotor 14. The above-described sensing and determining functions of the encoder 20 can be implemented using hardware, software, firmware, or a combination thereof. In some embodiments, the encoder 20 can include one or more programmable processors that are operable to perform one or both of the above-described sensing and determining functions. A person having ordinary skill in the art would be able to adapt (e.g., program) the encoder 20 to perform these functions described herein without undue experimentation.

As discussed briefly above, in some embodiments, the rotary machine 10 can be configured for use as an electric machine (e.g., an electric generator, an electric motor). During operation of the rotary machine 10 as an electric generator, the stator coils (not shown) can be electrically connected to a power storage device (not shown) in a known manner. The rotor magnetic field generated by the permanent magnets 34 of the rotor 14 can interact with the stator coils and can cause electric current to flow through the stator coils as the rotor 14 is caused to rotate relative to the housing shaft 24. The stator coils can be connected to a power storage device that receives and stores power generated by the electric current flowing through the stator coils. During operation of the rotary machine 10 as an electric motor, the stator coils can be electrically connected to an alternating current (AC) power supply (e.g., a three-phase AC power supply) in a known manner. A stator magnetic field can be generated by the stator as electric current from the AC power supply flows through the stator coils. The stator magnetic field can interact with the rotor magnetic field generated by the permanent magnets 34 of the rotor 14, thereby causing rotation of the rotor 14 relative to the housing shaft 24.

Referring to FIG. 1, during operation of the illustrated rotary machine 10 embodiments, a plurality of elevator ropes (not shown) contact the rotor sheave 42. The elevator ropes extend between an elevator car (not shown) and a counterweight (not shown). The rotor 14 is rotated relative the housing shaft 24, as described above, to move the elevator car and the counterweight within an elevator hoistway (not shown). The encoder 20 continuously generates a signal indicative of the speed and direction of rotation of the rotor 14.

Referring to FIG. 1, in the illustrated embodiments the rotary machine 10 additionally includes a control unit (not shown). The control unit is operable to receive the signal generated by the encoder 20. The control unit is operable to control one or more components of the rotary machine 10 and/or one more other components in response thereto. The control unit is operable to control the speed and direction of rotation of the rotor 14 by controlling a characteristic (e.g., magnitude, polarity) of the electric current flowing from the AC power supply. In some embodiments, the control unit is additionally or alternatively operable to control one or more brake units that are operable to brake (e.g., slow and/or stop movement of) the rotor 14 relative to the housing shaft 24. The functionality of the control unit can be implemented using hardware, software, firmware, or a combination thereof. The control unit can include, for example, one or more programmable processors. A person having ordinary skill in the art would be able to adapt (e.g., program) the control unit to perform the functionality described herein without undue experimentation. Although the control unit is described herein as being separate from the encoder 20, in some embodiments the control unit, or one or more features thereof, can be implemented as a feature of the encoder 20.

## Claims

1. A rotary machine (10), comprising:
a housing (12) having a housing wall (22) and a housing shaft (24), wherein the housing shaft extends from the housing wall in an axial direction along a housing shaft centerline (26);
a connection plate (28);
a rotor (14) extending from the connection plate (28) in the axial direction, and extending concentrically about the housing shaft centerline (26);
a first bearing (16) and a second bearing (18), the bearings (16, 18) supporting the rotor (14) on the housing shaft, wherein the bearings (16, 18) enable rotation of the rotor relative to the housing shaft and about the housing shaft centerline; and
an encoder (20) positionally fixed relative to the housing shaft, wherein the encoder has an encoder shaft (32) connected to the connection plate (28), the encoder shaft extends in the axial direction and extends about the housing shaft centerline, the encoder (20) is operable to sense a rotation characteristic of the encoder shaft, and the encoder is operable to determine a rotation characteristic of the connection plate based on the rotation characteristic of the encoder shaft; and
wherein the connection plate (28) is a disc-shaped unitary structure, including a base portion and a web portion that extends radially outward from the base portion, wherein the web portion includes a flange (100), wherein the connection plate (28) is connected to the rotor (14) at a position that is radially outward of the bearings (16,18);
**characterized in that**: the flange (100) engages a radially outer portion of the second bearing (18) to aid in maintaining an axial alignment of the first and second bearings (16,18), the encoder shaft (32) is directly connected to the connection plate (28); and
and by further comprising a connection ring (29) which is an annular structure, wherein the connection ring (29) is positioned axially between the connection plate (28) and the housing shaft (24), the connection ring (29) including an annular base portion and an annular web portion that extends radially outward from the annular base portion, wherein the annular base portion includes an aperture through which one or more portions of the encoder (20) extend, wherein the connection ring (29) is connected to the housing (12) at a position that is radially inward of the first and second bearings (16, 18), wherein the annular web portion includes a flange (102), wherein the flange (102) engages a radially inner portion of the second bearing (18), to aid in maintaining an axial alignment of the first and second bearings (16, 18).

2. The rotary machine of claim 1, wherein the housing shaft extends in the axial direction between a first housing shaft end (58) and a second housing shaft end (60), the first housing shaft end is disposed proximate the housing wall (22), the second housing shaft end is disposed proximate the connection plate (28), and the housing shaft forms a housing shaft cavity (62) extending between the first housing shaft end and the second housing shaft end; and
wherein the encoder further includes an encoder body (70), the encoder body is positionally fixed relative to the housing shaft, the encoder body is disposed at least partially within the housing shaft cavity proximate the second housing shaft end, the encoder shaft extends from the encoder body, and the encoder shaft is rotatable relative to the encoder body.

3. The rotary machine of claim 1 or 2, wherein the encoder (20) is operable to generate a signal indicative of the rotation characteristic of the rotor.

4. The rotary machine of claim 3, wherein the rotary machine (10) further comprises a control unit, the control unit is operable to receive the signal from the encoder, and the control unit is operable to control a component of the rotary machine in response to the signal.

5. The rotary machine of any preceding claim, wherein the web portion of the connection plate (28) is connected to an end surface of the rotor (14).

6. The rotary machine of any preceding claim, wherein the rotor (14) includes an annular rotor sheave (42) having an annularly-extending sheave groove configured to contact a tension member.

7. The rotary machine of any preceding claim, wherein the rotor (14) includes an annular rotor pulley (44) having a first annular portion (64), a second annular portion (66), and a web portion (68), wherein the first annular portion and the second annular portion are separated from one another by a distance that extends in the axial direction, and the web portion extends between the first annular portion and the second annular portion in a radial direction that is at least substantially perpendicular to the axial direction.

8. The rotary machine of claim 7, further comprising a stator (36) disposed relative to the housing and the rotor, wherein the stator includes a stator annulus (38) that extends concentrically about the shaft centerline; and
wherein the first annular portion (64) of the rotor pulley (44) is aligned with the stator (36) in the axial direction.

9. The rotary machine of claim 7 or 8, wherein the bearings (16, 18) support the first annular portion (64) of the rotor pulley (44) on the housing shaft (24).

10. The rotary machine of any preceding claim, further comprising a stator (36) disposed relative to the housing and the rotor (14) , wherein the stator includes a stator annulus that extends concentrically about the shaft centerline, the stator annulus defines a plurality of radially extending stator teeth (40), and the stator includes a plurality of stator coils wrapped around the plurality of stator teeth; and
wherein the rotor includes a plurality of permanent magnets (34) extending circumferentially about the housing shaft centerline, and the plurality of permanent magnets generate a rotor magnetic field operable to interact with the plurality of stator coils.

11. The rotary machine of claim 10, configured for use as an electric generator, wherein: the rotary machine configured for use as an electric generator includes a power storage device, the rotor magnetic field is operable to cause electric current to flow through the plurality of stator coils when the rotor rotates relative to the housing shaft, and the plurality of stator coils is connected to the power storage device operable to receive and store power generated by electric current flowing through the stator coils.

12. The rotary machine of claim 10, configured for use as an electric motor, wherein the plurality of stator coils are operable to generate a stator magnetic field operable to interact with the rotor magnetic field to cause the rotor to rotate relative to the housing shaft.

## Patentansprüche

1. Drehende elektrische Maschine (10), umfassend:
ein Gehäuse (12), das eine Gehäusewand (22) und ein Gehäusewelle (24) aufweist, wobei sich die Gehäusewelle von der Gehäusewand in eine axiale Richtung entlang einer Gehäusewellenmittellinie (26) erstreckt;
eine Verbindungsplatte (28);
einen Läufer (14), der sich von der Verbindungsplatte (28) in der axialen Richtung erstreckt und sich konzentrisch um die Gehäusewellenmittellinie (26) erstreckt;
ein erstes Lager (16) und ein zweites Lager (18), wobei die Lager (16, 18) den Läufer (14) auf der Gehäusewelle stützen, wobei die Lager (16, 18) eine Drehung des Läufers in Bezug auf die Gehäusewelle und um die Gehäusewellenmittellinie ermöglichen; und
einen Geber (20), der positionsmäßig an der Gehäusewelle fixiert ist, wobei der Geber eine Geberwelle (32) aufweist, die mit der Verbindungsplatte (28) verbunden ist, sich die Geberwelle in der axialen Richtung erstreckt und sich um die Gehäusewellenmittellinie erstreckt, der Geber (20) betriebsfähig ist, um eine Drehungseigenschaft der Geberwelle zu erfassen, und der Geber betriebsfähig ist, um eine Drehungseigenschaft der Verbindungsplatte auf Grundlage der Drehungseigenschaft der Geberwelle zu bestimmen; und
wobei die Verbindungsplatte (28) einer scheibenförmigen einheitlichen Struktur, einschließend einen Basisteil und einen Stegteil, der sich von dem Basisteil radial nach außen erstreckt, entspricht, wobei der Stegteil einen Flansch (100) einschließt, wobei die Verbindungsplatte (28) mit dem Läufer (14) in einer Position verbunden ist, die sich radial außerhalb der Lager (16,18) befindet;
**dadurch gekennzeichnet, dass**: der Flansch (100) einen radial äußeren Teil des zweiten Lagers (18) in Eingriff nimmt, um dazu beizutragen, eine axiale Ausrichtung des ersten und zweiten Lagers (16,18) aufrechtzuerhalten, wobei die Geberwelle (32) direkt mit der Verbindungsplatte (28) verbunden ist; und
und dadurch, dass sie ferner einen Verbindungsring (29) umfasst, der einer ringförmigen Struktur entspricht, wobei der Verbindungsring (29) axial zwischen der Verbindungsplatte (28) und der Gehäusewelle (24) positioniert ist, wobei der Verbindungsring (29) einen ringförmigen Basisteil und einen ringförmigen Stegteil einschließt, der sich von dem ringförmigen Basisteil radial nach außen erstreckt, wobei der ringförmige Basisteil eine Öffnung einschließt, durch die sich ein oder mehrere Teile des Gebers (20) erstrecken, wobei der Verbindungsring (29) mit dem Gehäuse (12) in einer Position verbunden ist, die radial innen von dem ersten und zweiten Lager (16, 18) liegt, wobei der ringförmige Stegteil einen Flansch (102) einschließt, wobei der Flansch (102) einen radial inneren Teil des zweiten Lagers (18) in Eingriff nimmt, um dazu beizutragen, eine axiale Ausrichtung des ersten und zweiten Lagers (16,18) aufrechtzuerhalten.

2. Drehende elektrische Maschine nach Anspruch 1, wobei sich die Gehäusewelle in der axialen Richtung zwischen einem ersten Gehäusewellenende (58) und einem zweiten Gehäusewellenende (60) erstreckt, das erste Gehäusewellenende in der Nähe der Gehäusewand (22) angeordnet ist, das zweite Gehäusewellenende in der Nähe der Verbindungsplatte (28) angeordnet ist, und die Gehäusewelle einen Gehäusewellenhohlraum (62) bildet, der sich zwischen dem ersten Gehäusewellenende und dem zweiten Gehäusewellenende erstreckt; und
wobei der Geber ferner einen Geberkörper (70) einschließt, der Geberkörper in Bezug auf die Gehäusewelle positionsmäßig fixiert ist, der Geberkörper zumindest teilweise in dem Gehäusewellenhohlraum in der Nähe des zweiten Gehäusewellenendes angeordnet ist, sich die Geberwelle von dem Geberkörper erstreckt, und die Geberwelle in Bezug auf den Geberkörper drehbar ist.

3. Drehende elektrische Maschine nach Anspruch 1 oder 2, wobei der Geber (20) betriebsfähig ist, um ein Signal zu generieren, das die Drehungseigenschaft des Läufers anzeigt.

4. Drehende elektrische Maschine nach Anspruch 3, wobei die drehende elektrische Maschine (10) ferner eine Steuereinheit umfasst, die Steuereinheit betriebsfähig ist, um das Signal von dem Geber zu empfangen, und die Steuereinheit betriebsfähig ist, um ein Bauteil der drehenden elektrischen Maschine als Reaktion auf das Signal zu steuern.

5. Drehende elektrische Maschine nach einem vorhergehenden Anspruch, wobei der Stegteil der Verbindungsplatte (28) mit einer Endfläche des Läufers (14) verbunden ist.

6. Drehende elektrische Maschine nach einem vorhergehenden Anspruch, wobei der Läufer (14) eine ringförmige Läuferscheibe (42) einschließt, die eine sich ringförmig erstreckende Scheibennut aufweist, die konfiguriert ist, um ein Spannelement zu berühren.

7. Drehende elektrische Maschine nach einem vorhergehenden Anspruch, wobei der Läufer (14) eine ringförmige Läuferriemenscheibe (44) einschließt, die einen ersten ringförmigen Teil (64), einen zweiten ringförmigen Teil (66) und einen Stegteil (68) aufweist, wobei der erste ringförmige Teil und der zweite ringförmige Teil voneinander durch einen Abstand beabstandet sind, der sich in der axialen Richtung erstreckt, und sich der Stegteil zwischen dem ersten ringförmigen Teil und dem zweiten ringförmigen Teil in einer radialen Richtung erstreckt, die zumindest im Wesentlichen senkrecht zu der axialen Richtung verläuft.

8. Drehende elektrische Maschine nach Anspruch 7, ferner umfassend einen Stator (36), der in Bezug auf das Gehäuse und den Läufer angeordnet ist, wobei der Stator einen Statorring (38) einschließt, der sich konzentrisch um die Wellenmittellinie erstreckt; und
wobei der erste ringförmige Teil (64) der Läuferriemenscheibe (44) mit dem Stator (36) in der axialen Richtung ausgerichtet ist.

9. Drehende elektrische Maschine nach Anspruch 7 oder 8, wobei die Lager (16, 18) den ersten ringförmigen Teil (64) der Läuferriemenscheibe (44) auf der Gehäusewelle (24) stützen.

10. Drehende elektrische Maschine nach einem vorhergehenden Anspruch, ferner umfassend einen Stator (36), der in Bezug auf das Gehäuse und den Läufer (14) angeordnet ist, wobei der Stator einen Statorring einschließt, der sich konzentrisch um die Wellenmittellinie erstreckt, der Statorring eine Vielzahl von sich radial erstreckenden Statorzähnen (40) definiert, und der Stator eine Vielzahl von Statorspulen einschließt, die um die Vielzahl von Statorzähnen gewickelt sind; und
wobei der Läufer eine Vielzahl von Dauermagneten (34) einschließt, die sich umlaufend um die Gehäusewellenmittellinie erstrecken, und die Vielzahl von Dauermagneten ein Läufermagnetfeld erzeugen, das betriebsfähig ist, um mit der Vielzahl von Statorspulen zu interagieren.

11. Drehende elektrische Maschine nach Anspruch 10, die zur Verwendung als ein Stromgenerator konfiguriert ist, wobei: die drehende elektrische Maschine, die zur Verwendung als ein Stromgenerator konfiguriert ist, eine Energiespeichervorrichtung einschließt, das Läufermagnetfeld betriebsfähig ist, um zu veranlassen, dass elektrischer Strom durch die Vielzahl von Statorspulen fließt, wenn sich der Läufer in Bezug auf die Gehäusewelle dreht, und die Vielzahl von Statorspulen mit der Energiespeichervorrichtung verbunden ist, die betriebsfähig ist, um Energie aufzunehmen und zu speichern, die durch elektrischen Strom generiert wurde, der durch die Statorspulen fließt.

12. Drehende elektrische Maschine nach Anspruch 10, die zur Verwendung als ein Elektromotor konfiguriert ist, wobei die Vielzahl von Statorspulen betriebsfähig ist, um ein Statormagnetfeld zu erzeugen, das betriebsfähig ist, um mit dem Läufermagnetfeld zu interagieren, um zu veranlassen, dass sich der Läufer in Bezug auf die Gehäusewelle dreht.

## Revendications

1. Machine rotative (10), comprenant :
un carter (12) ayant une paroi de carter (22) et un arbre de carter (24), dans laquelle l'arbre de carter s'étend de la paroi de carter dans un sens axial le long d'un axe central de l'arbre de carter (26) ;
une plaque de raccordement (28) ;
un rotor (14) s'étendant de la plaque de raccordement (28) dans le sens axial, et s'étendant de manière concentrique autour de l'axe central de l'arbre de carter (26) ;
un premier roulement (16) et un second roulement (18), les roulements (16, 18) soutenant le rotor (14) sur l'arbre de carter, dans laquelle les roulements (16, 18) permettent la rotation du rotor par rapport à l'arbre de carter et autour de l'axe central de l'arbre de carter ; et
un codeur (20) fixé en position par rapport à l'arbre de carter, dans laquelle le codeur est doté d'un arbre de codeur (32) relié à la plaque de raccordement (28), l'arbre de codeur s'étend dans le sens axial et s'étend autour de l'axe central de l'arbre de carter, le codeur (20) peut détecter une caractéristique de rotation de l'arbre de codeur, et le codeur peut déterminer une caractéristique de rotation de la plaque de raccordement en fonction de la caractéristique de rotation de l'arbre de codeur ; et
dans laquelle la plaque de raccordement (28) est une structure unitaire en forme de disque, comportant une partie de base et une partie de bande qui s'étend radialement vers l'extérieur à partir de la partie de base, dans laquelle la partie de bande comporte une bride (100), dans laquelle la plaque de raccordement (28) est reliée au rotor (14) à une position radialement vers l'extérieur des roulements (16, 18) ;
**caractérisée en ce que** : la bride (100) vient en prise avec une partie radialement vers l'extérieur du second roulement (18) pour faciliter le maintien d'un alignement axial des premier et second roulements (16, 18), l'arbre de codeur (32) est relié directement à la plaque de raccordement (28) ; et
et en comprenant en outre un anneau de raccordement (29) qui est une structure annulaire, dans laquelle l'anneau de raccordement (29) est positionné axialement entre la plaque de raccordement (28) et l'arbre de carter (24), l'anneau de raccordement (29) comportant une partie de base annulaire et une partie de bande annulaire qui s'étend radialement vers l'extérieur à partir de la partie de base annulaire, dans laquelle la partie de base annulaire comporte une ouverture à travers laquelle une ou plusieurs parties du codeur (20) s'étendent, dans laquelle l'anneau de raccordement (29) est relié au carter (12) à une position radialement vers l'intérieur des premier et second roulements (16, 18), dans laquelle la partie de bande annulaire comporte une bride (102), dans laquelle la bride (102) vient en prise avec une partie radialement vers l'intérieur du second roulement (18), pour faciliter le maintien d'un alignement axial des premier et second roulements (16, 18).

2. Machine rotative selon la revendication 1, dans laquelle l'arbre de carter s'étend dans le sens axial entre une première extrémité de l'arbre de carter (58) et une seconde extrémité de l'arbre de carter (60), la première extrémité de l'arbre de carter est disposée à proximité de la paroi de carter (22), la seconde extrémité de l'arbre de carter est disposée à proximité de la plaque de raccordement (28) et l'arbre de carter forme une cavité de l'arbre de carter (62) s'étendant entre la première extrémité de l'arbre de carter et la seconde extrémité de l'arbre de carter ; et
dans laquelle le codeur comporte en outre un corps de codeur (70), le corps de codeur est fixé en position par rapport à l'arbre de carter, le corps de codeur est disposé au moins partiellement à l'intérieur de la cavité de l'arbre de carter à proximité de la seconde extrémité de l'arbre de carter, l'arbre de codeur s'étend à partir du corps de codeur, et l'arbre de codeur étant rotatif par rapport au corps de codeur.

3. Machine rotative selon la revendication 1 ou 2, dans laquelle le codeur (20) peut être utilisé pour générer un signal indiquant la caractéristique de rotation du rotor.

4. Machine rotative selon la revendication 3, dans laquelle la machine rotative (10) comprend en outre une unité de commande, l'unité de commande peut être utilisée pour recevoir le signal provenant du codeur et l'unité de commande peut être utilisée pour commander un composant de la machine rotative en réponse au signal.

5. Machine rotative selon une quelconque revendication précédente, dans laquelle la partie de bande de la plaque de raccordement (28) est reliée à une surface d'extrémité du rotor (14) .

6. Machine rotative selon une quelconque revendication précédente, dans laquelle le rotor (14) comporte un réa de rotor annulaire (42) ayant une rainure de réa s'étendant annulairement configurée pour entrer en contact avec un élément de tension.

7. Machine rotative selon une quelconque revendication précédente, dans laquelle le rotor (14) comporte une poulie de rotor annulaire (44) ayant une première partie annulaire (64), une seconde partie annulaire (66), et une partie de bande (68), dans laquelle la première partie annulaire et la seconde partie annulaire sont séparées l'une de l'autre d'une distance qui s'étend dans le sens axial, et la partie de bande s'étend entre la première partie annulaire et la seconde partie annulaire dans un sens radial qui est au moins sensiblement perpendiculaire au sens axial.

8. Machine rotative selon la revendication 7, comprenant en outre un stator (36) disposé par rapport au carter et au rotor, dans laquelle le stator comporte une couronne du stator (38) qui s'étend de manière concentrique autour de l'axe central de l'arbre ; et
dans laquelle la première partie annulaire (64) de la poulie de rotor (44) est alignée avec le stator (36) dans le sens axial.

9. Machine rotative selon la revendication 7 ou 8, dans laquelle les roulements (16, 18) supportent la première partie annulaire (64) de la poulie de rotor (44) sur l'arbre de carter (24) .

10. Machine rotative selon une quelconque revendication précédente, comprenant en outre un stator (36) disposé par rapport au carter et au rotor (14), dans laquelle le stator comporte une couronne de stator qui s'étend de manière concentrique autour de l'axe central de l'arbre, l'anneau de stator définit une pluralité de dents de stator s'étendant radialement (40), et le stator comporte une pluralité de bobines de stator enroulées autour de la pluralité de dents de stator ; et
dans laquelle le rotor comporte une pluralité d'aimants permanents (34) s'étendant circonférentiellement autour de l'axe central de l'arbre de carter, et la pluralité d'aimants permanents génèrent un champ magnétique du rotor pouvant être utilisé pour interagir avec la pluralité de bobines de stator.

11. Machine rotative selon la revendication 10, configurée pour être utilisée comme générateur électrique, dans laquelle : la machine rotative configurée pour être utilisée comme générateur électrique comporte un dispositif de stockage de puissance, le champ magnétique du rotor peut être utilisé pour faire circuler du courant électrique à travers la pluralité de bobines de stator lorsque le rotor tourne par rapport à l'arbre de carter, et la pluralité de bobines de stator est reliée au dispositif de stockage de puissance pouvant être utilisé pour recevoir et stocker la puissance générée par le courant électrique circulant dans les bobines de stator.

12. Machine rotative selon la revendication 10, configurée pour être utilisée comme moteur électrique, dans laquelle la pluralité de bobines de stator peuvent être utilisées pour générer un champ magnétique du stator pouvant être utilisé pour interagir avec le champ magnétique du rotor pour faire tourner le rotor par rapport à l'arbre de carter.
